(19) Europäisches Patentamt / European Patent Office / Office européen des brevets

(11) **EP 3 501 209 B1**

(12) **EUROPEAN PATENT SPECIFICATION**

(45) Date of publication and mention of the grant of the patent:
**14.04.2021 Bulletin 2021/15**

(51) Int Cl.:
***H04W 52/02*** *(2009.01)*      ***H04W 16/32*** *(2009.01)*
***H04W 24/02*** *(2009.01)*      ***H04W 36/22*** *(2009.01)*

(21) Application number: **16914323.7**

(22) Date of filing: **22.08.2016**

(86) International application number:
**PCT/SE2016/050776**

(87) International publication number:
**WO 2018/038649 (01.03.2018 Gazette 2018/09)**

(54) **A PROCESSING UNIT AND A METHOD THEREIN FOR INITIATING CELL ACTIVATION**

VERARBEITUNGSEINHEIT UND VERFAHREN DARIN ZUR INITIIERUNG DER ZELLAKTIVIERUNG

UNITÉ DE TRAITEMENT ET PROCÉDÉ ASSOCIÉ POUR INITIER UNE ACTIVATION DE CELLULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2019 Bulletin 2019/26**

(73) Proprietor: **Telefonaktiebolaget LM Ericsson (publ)**
**164 83 Stockholm (SE)**

(72) Inventors:
• **CIRKIC, Mirsad**
  **SE- 582 46 Linköping (SE)**
• **RYDÉN, Henrik**
  **SE-169 52 Solna (SE)**
• **BERGLUND, Joel**
  **SE-58 333 Linköping (SE)**
• **ENGSTRÖM, Stefan**
  **SE-583 32 Linköping (SE)**

(74) Representative: **Zacco Sweden AB**
**Valhallavägen 117**
**Box 5581**
**114 85 Stockholm (SE)**

(56) References cited:
**EP-A1- 2 665 312**       **EP-A1- 2 950 582**
**WO-A1-2012/096603**   **WO-A1-2013/016300**
**US-A1- 2012 142 328**   **US-A1- 2012 329 471**
**US-A1- 2015 282 070**   **US-A1- 2016 156 440**

**Description**

TECHNICAL FIELD

Embodiments herein relate generally to a processing unit and to a method therein. In particular, embodiments herein relate to initiation of cell activation in a wireless communications network.

BACKGROUND

Communications devices such as terminals are also known as e.g. User Equipments (UEs), mobile terminals, stations (STAs), wireless devices, wireless terminals and/or mobile stations. Terminals are enabled to communicate wirelessly in a wireless communications network, such as a Wireless Local Area Network (WLAN) or a cellular communications network sometimes also referred to as a cellular radio system or cellular networks. The communication may be performed e.g. between two terminals, between a terminal and a regular telephone and/or between a terminal and a server via an access network and possibly one or more core networks, comprised within the wireless communications network.

The above communications devices may further be referred to as mobile telephones, cellular telephones, laptops, tablets or sensors with wireless capability, just to mention some further examples. The communications devices in the present context may be, for example, portable, pocket-storable, hand-held, wall-mounted, computer-comprised, or vehicle-mounted mobile devices. The communications devices are enabled to communicate voice and/or data, via an access network, such as a Radio Access Network (RAN), with another entity, such as e.g. an Access Point (AP), another communications device or a server.

The communications network covers an area, e.g. a geographical area, which is divided into subareas, such as coverage areas, cells or clusters. In a cellular communications network each cell area is served by an access node such as a base station, e.g. a Radio Base Station (RBS), which sometimes may be referred to as e.g. eNodeB (eNB), NodeB, B node, or Base Transceiver Station (BTS), depending on the technology and terminology used. The base stations may be of different classes such as e.g. macro eNodeB, home eNodeB, micro eNode B or pico base station, based on transmission power, functional capabilities and thereby also cell size. A cell is the area where radio coverage is provided by the base station at a base station site. One base station, situated on the base station site, may serve one or several cells. Further, each base station may support one or several communication technologies. The base stations communicate over the air interface operating on radio frequencies with the communications devices within range of the base stations. In the context of this disclosure, the expression Downlink (DL) is used for the transmission path from the base station to the communications device. The expression Uplink (UL) is used for the transmission path in the opposite direction i.e. from the communications device to the base station.

A Universal Mobile Telecommunications System (UMTS) is a third generation (3G) telecommunication network, which evolved from the second generation (2G) Global System for Mobile Communications (GSM). The UMTS terrestrial radio access network (UTRAN) is essentially a RAN using wideband code division multiple access (WCDMA) and/or High Speed Packet Access (HSPA) for user equipments. In a forum known as the Third Generation Partnership Project (3GPP), telecommunications suppliers propose and agree upon standards for third generation networks, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. This type of connection is sometimes referred to as a backhaul connection. The RNCs and BSCs are typically connected to one or more core networks.

Specifications for the Evolved Packet System (EPS), also called a Fourth Generation (4G) network, have been completed within the 3rd Generation Partnership Project (3GPP) and this work continues in the coming 3GPP releases, for example to specify a Fifth Generation (5G) network. The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs. In general, in E-UTRAN/LTE the functions of an RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques can significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO systems.

As the mobile traffic, e.g. the wireless communication, in the wireless communications network increases due to the popularization of smart-phones and other data heavy applications, the demand on the wireless communications network increases. One way to improve the capacity of the wireless communications network is to deploy one or more additional cells having lower output power, which are typically placed in areas with high mobile traffic. By the expression "lower output power" when used herein is meant that the additional cell having lower output power is served by an access node that has a lower output power than an access node serving a basic coverage cell. For example, the radio coverage area of the additional cell may be located where there already exist radio coverage from the basic coverage cell in order to improve the radio capacity in that area. By the expression "basic coverage cell" when used in this disclosure is meant a cell served by an access node that provides radio coverage for a large geographical area, e.g. a macro cell.

The one or more additional cells with lower output power is sometimes referred to as capacity cells or small cells. A small cell is served by a low power access node, such as a Low Power Low Range (LPLR) access node e.g. a micro Radio Network Node (RNN), a femto RNN or a pico RNN. By activating the capacity cell during high traffic around the capacity cell, the cell that provides basic coverage, e.g. a basic coverage cell such as a macro cell, may be offloaded which ideally would lead to gains in terms of for example capacity and power.

Energy efficiency is an important aspect in wireless communications networks. One method for providing energy saving is to put capacity cells into a sleep mode, e.g. an inactive mode or idle mode. The activation or deactivation of a capacity cell may be triggered from a base station that provides basic coverage, e.g. that serves a basic coverage cell, and is typically a trade-off between energy efficiency and capacity.

One drawback with the use of capacity cells is that the traffic around the capacity cells is not uniform during the day but may vary quite much. In cases when there is quite low traffic around the capacity cell, it may be more energy efficient to turn off, e.g. inactivate or deactivate, the capacity cell until the load increases. The capacity cell may later be activated when the traffic is higher and when there are communications devices in the vicinity of the capacity cell which may be moved into the capacity cell by a handover procedure or some other cell changing procedure. However, it may be quite tricky to find out whether or not the communications devices served by the basic coverage cell may be served by the capacity cell without activating the capacity cell. This means that in some situations when the load increases, the capacity cell is activated in order to determine whether or not one or more communications devices served by the basic coverage cell may be served by the capacity cell. In case no such communications devices exist around the activated capacity cell, the activation is done in vain and hence leading to a waste of spent energy.

Further, when having several capacity cells, e.g. two or more capacity cells, it is difficult to know which and how many capacity cells that should be activated.

Furthermore, a capacity cell is often deployed in handover regions of two basic coverage cells, and therefore it is difficult to optimize capacity versus energy consumption.

US 2012/329471 A1 discloses methods and devices enabling improved switch-on procedures during the reactivation of base stations already switched off to save power. A method of activating a de-activated cell in a cellular radio system is provided. First measurements are collected from a number of user equipments connected to the cellular radio system. Based on the collected measurements a model for mapping a cell, the best cell, providing the least power increase in the cellular radio system when activated is constructed. When the traffic demand of the cellular radio system cannot be served using already activated cells it is determined to activate the cell that is mapped as the best cell to be activated.

US 2016/156440 A1 discloses network management of a wireless network in which inactive cells are selectively activated and thereby changing the radio environment of a user equipment. The changed radio environment is assessed to determine a preferred distribution of active cells for that user equipment.

US 2012/142328 A1 discloses a location-based method that involves, in response to a load of the requesting entity exceeding a load threshold, identifying candidate network entities to which to offload a user equipment (UE), each of the candidate network entities being in sleep mode. The method may involve determining coverage and location information for the candidate network entities, and determining location information for the UE. The method may involve selecting a given network entity to turn ON based at least in part on the coverage information and the location information.

US 2015/282070 A1 discloses how energy efficient scheduling can be achieved by computing scheduling assignments in accordance with a transmit point (TP) muting utility. More specifically, candidate scheduling assignments that mute different combinations of transmit points are evaluated to determine which offers the highest utility. A set of scheduling assignments may be evaluated during each iteration in a sequence of iterations, with each scheduling assignment muting a different one of the remaining TPs. At the end of each iteration, the scheduling assignment providing the highest utility is selected, and the TP muted by that scheduling assignment is muted during all succeeding iterations.

SUMMARY

An object of embodiments herein is to address at least some of the above-mentioned drawbacks among others and to improve the performance in a wireless communications network.

The object is achieved by a method performed by a processing unit for initiating activation of a target cell according to claim 1 and a processing unit according to claim 8.

BRIEF DESCRIPTION OF DRAWINGS

Examples of embodiments herein are described in more detail with reference to attached drawings in which:

Figure 1A   is a schematic block diagram schematically illustrating embodiments of a wireless communications network;

Figure 1B   is a schematic block diagram schematically illustrating embodiments of a Radio Network Node comprising a processing unit;

Figure 2    is a flowchart schematically illustrating embodiments of a method performed by a processing unit;

Figure 3    is a schematic combined flowchart and signalling scheme of embodiments of a wireless communications network;

Figure 4    is a schematic block diagram schematically illustrating embodiments of a processing unit;

Figure 5    is a schematic block diagram schematically illustrating a first exemplifying example of embodiments of a wireless communications network; and

Figure 6    is a schematic block diagram schematically illustrating a second exemplifying example of embodiments of a wireless communications network.

DETAILED DESCRIPTION

In order to facilitate understanding of embodiments herein, some problems with the state of the art communications networks will first be identified and discussed.

As mentioned above, one drawback with the use of capacity cells is that the traffic around the capacity cells is not uniform during the day but may vary quite much. In cases when there is quite low traffic around the capacity cell, it may be more energy efficient to turn off, e.g. inactivate or deactivate, the capacity cell until the load increases. The terms "inactivate" and "deactivate" may in this disclosure be used interchangeably in order to describe the turning off of the capacity cell's radio activity, e.g. when setting the capacity cell in an idle mode or sleep mode. The capacity cell may later be activated when the traffic is higher and when there are communications devices in the vicinity of the capacity cell which may be moved into the capacity cell by a handover procedure or some other cell changing procedure. However, it may be quite tricky to find out whether or not the communications devices served by the basic coverage cell may be served by the capacity cell without activating the capacity cell. This means that in some situations when the load increases, there might be no communications devices around a capacity cell that is activated, making the activation being done in vain and hence leading to a waste of spent energy.

When having several capacity cells, e.g. more than two capacity cells, it is difficult to know which and how many capacity cells that should be activated. Furthermore, a capacity cell is often deployed in handover regions of two basic coverage cells and a collaborative framework of adjacent basic coverage cells is desirable in order to optimize capacity versus energy consumption.

An object addressed by embodiments herein is therefore how to improve performance in a wireless communications network.

Therefore, as mentioned above, according to embodiments herein, a way of improving the performance in the wireless communications network is provided.

In order to overcome the above-mentioned drawback, embodiments herein provide activation of one or more target cells, e.g. one or more capacity cells, using estimates of energy savings from a first cell and possibly also from one or more second cells. Thereby, the capacity of the wireless communications network is optimised while taking the energy consumption into consideration.

Note that although terminology from 3GPP LTE is used in this disclosure to exemplify the embodiments herein, this should not be seen as limiting the scope of the embodiments herein to only the aforementioned system. Other wireless systems, including Wideband Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

In this section, the embodiments herein will be illustrated in more detail by a number of exemplary embodiments. It should be noted that these embodiments are not mutually exclusive. Components from one embodiment may be assumed to be present in another embodiment and it will be obvious to a person skilled in the art how those components may be used in the other exemplary embodiments.

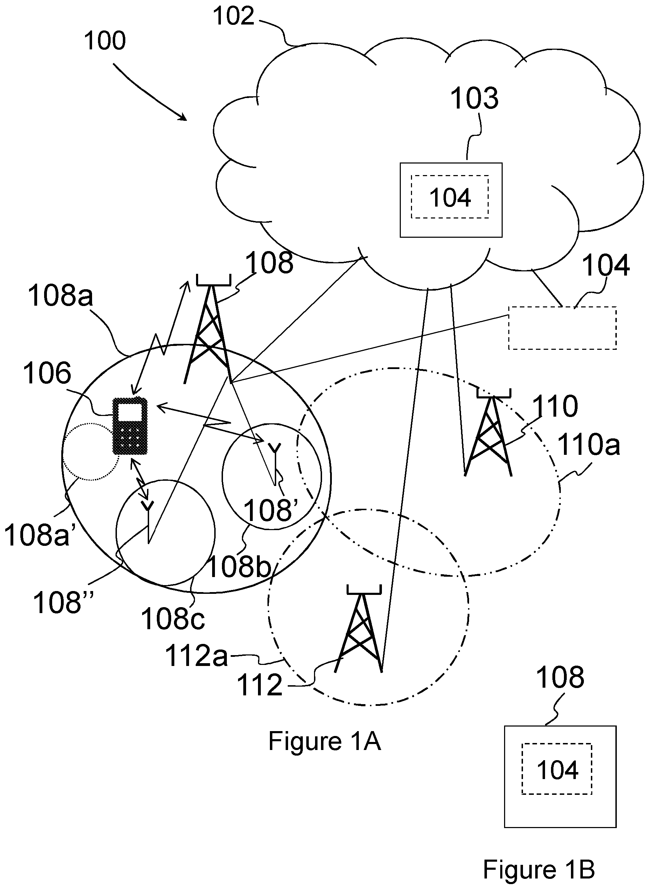

Embodiments herein relate to a **wireless communications network 100** as schematically illustrated in **Figure 1A**. For example, embodiments herein may be implemented in the wireless communications network 100. The wireless communications network 100 may be a cellular communications network, such as e.g. a 5G network, an LTE network, a WCDMA network, an GSM network, any 3GPP cellular network, a WiMAX network , or any other wireless communications network or system.

**A core network 102** may be comprised in the wireless communications network 100. The core network 102 is configured to operate in the wireless communications network 100. The core network 102 may be a wireless core network such as a 5G core network, an LTE core network, e.g. an Evolved Packet Core (EPC) network; a WCDMA core network; a GSM core network; any 3GPP core network; WiMAX core network; or any cellular core network.

**One or more Core Network Nodes (CNNs) 103** may operate in the core network 102. However, for clarity reasons only one CNN 103 is illustrated in Figure 1A. The one or more CNN 103 may be one or more of an Evolved-Serving Mobile Location Centre (E-SMLC), a Mobile Switching Center (MSC), a Mobility Management Entity (MME), an Operation & Maintenance (O&M) node, a Serving GateWay (S-GW), a Serving General Packet Radio Service (GPRS) Node (SGSN), etc.

**A processing unit 104** operates in the wireless communications network 100. The processing unit 104 is comprised in the wireless communications network 100.

In some embodiments the processing unit 104 operates in the core network 102, and then the processing unit 104 may be the CNN 103 or may be comprised in the CNN 103. Alternatively, the processing unit 104 may be arranged separately from and in communication with the core network 102. As schematically illustrated in **Figure 1B**, the processing unit 104 may be comprised in an RNN, e.g. a first RNN 108 which will be described below. However, the processing unit 104 may also be the RNN, e.g. the first RNN 108.

For example, when the processing unit 104 corresponds to or is comprised in the CNN 103, the processing unit 102 may correspond to or may be comprised in an Evolved-Serving Mobile Location Centre (E-SMLC), a Mobile Switching Center (MSC), a Mobility Management Entity (MME), an Operation & Maintenance (O&M) node, a Serving GateWay (S-GW), a Serving General Packet Radio Service (GPRS) Node (SGSN), etc., operating in the core network 102.

The processing unit 104 may also be part of an operation and maintenance node or system controlling the wireless communications network.

In some embodiments, the processing unit 104 corresponds to a node or is comprised in a node that operates in a so called computer cloud or computing cloud. The node operating in the cloud may be referred to as a cloud node, and thus the processing unit 104 may correspond to the cloud node or the processing unit 104 may be comprised in the cloud node. The computing cloud may also be referred to as a cloud system of servers or computers, or simply be named a cloud for providing certain service(s) to outside the cloud via a communication interface. The exact configuration of nodes etc. comprised in the cloud in order to provide said service(s) may not be known outside the cloud. The name "cloud" is often explained as a metaphor relating to that the actual device(s) or network element(s) providing the services are typically invisible for a user of the provided service(s), such as if obscured by a cloud.

**A communications device 106** operates in the wireless communications network 100. In some embodiments disclosed herein, the non-limiting term User Equipment (UE) is used and it refers to any type of communications device communicating with a network node in a communications network. Examples of communications devices are wireless devices, target devices, device to device UEs, machine type UEs or UEs capable of machine to machine communication, Personal Digital Assistants (PDA), iPADs, Tablets, mobile terminals, smart phones, Laptop Embedded Equipped (LEE), Laptop Mounted Equipment (LME), USB dongles etc.

In this disclosure the terms communications device, wireless device and UE are used interchangeably. Further, it should be noted that the term UE used in this disclosure also covers other communications devices such as Machine Type of Communication (MTC) device, an Internet of Things (IoT) device, e.g. a Cellular IoT (CIoT) device. Please note the term user equipment used in this document also covers other wireless devices such as Machine to Machine (M2M) devices, even though they do not have any user.

**A first Radio Network Node (RNN) 108** operates in the wireless communications network 100. The first RNN 108 may be comprised in the wireless communications network 100. The first RNN 108 may be a radio access node such as a radio base station, for example an eNodeB, also denoted eNB, a Home eNodeB, or a NodeB or any other network node capable to serve a communications device 106 when located within a **first area 108a**, e.g. a first geographical area, in a communications network, such as the communications network 100. In this disclosure, the first area 108a is sometimes referred to as a first coverage area, a first cell or a first cluster wherein the first RNN 108 provides radio coverage. Herein, this is also specified as the first RNN 108 manages or is configured to manage communication with the communications devices 106 in the first area 108a. Sometimes in this disclosure this is also referred to as the first RNN 108 is associated with communications device 106 when it is located and/or operates within the first area 108a.

Thus, the terms first area 108a, first coverage area 108a, first cell 108a and first cluster 108a may be used interchangeably.

Other examples of the first RNN 108 are Multi-Standard Radio (MSR) nodes such as MSR BS, network controllers, Radio Network Controllers (RNCs), Base Station Controllers (BSCs), relays, donor nodes controlling relay, Base Transceiver Stations (BTSs), Access Points (APs), transmission points, transmission nodes, Remote Radio Units (RRUs), Remote Radio Heads (RRHs), nodes in Distributed Antenna System (DAS) etc.

The first cell 108a may be a basic coverage cell or an active capacity cell. When the first cell 108a is an active capacity cell, it should be understood that the first cell 108a may be served by a lower power access node as described above. In such embodiments, the first RNN 108 is a lower power RNN.

The first cell 108a may be divided into **one or more cell areas 108a'** which each area is smaller than the area of the first cell 108a. Therefore sometimes in this disclosure the one or more cell areas 108a are referred to as one or more smaller cell areas 108a'. For clarity reasons, only one smaller cell area 108a' is shown in Figure 1. It should be understood that the one or more cell areas 108a' may not be associated with a separate transmitter, e.g. a Radio Network Node but is associated with the same transmitter, e.g. the RNN 108, as the cell area of the first cell 108a.

**A target Radio Network Node (RNN) 108'** may operate in the wireless communications network 100. The target RNN 108' may be comprised in the wireless communications network 100. The target RNN 108' may be a radio access node such as a radio base station, for example an eNodeB, also denoted eNB, a Home eNodeB, or a NodeB or any other network node capable to serve a communications device 106 when located within **a target area 108b,** e.g. a target geographical area, in a communications network, such as the communications network 100. In this disclosure, the target area 108b is sometimes referred to as a target coverage area, a target cell or a target cluster wherein the target RNN 108' provides radio coverage. Herein, this is also specified as the target RNN 108' manages or is configured to manage communication with the communications devices 106 in the target area 108b. Sometimes in this disclosure this is also referred to as the target RNN 108' is associated with communications device 106 when it is located and/or operates within the target area 108b.

The terms target area 108b, target coverage area 108b, target cell 108b and target cluster 108b may be used interchangeably. Sometimes herein the target area 108b is referred to as a capacity cell.

Other examples of the target RNN 108' are Multi-Standard Radio (MSR) nodes such as MSR BS, network controllers, Radio Network Controllers (RNCs), Base Station Controllers (BSCs), relays, donor nodes controlling relay, Base Transceiver Stations (BTSs), Access Points (APs), transmission points, transmission nodes, Remote Radio Units (RRUs), Remote Radio Heads (RRHs), nodes in Distributed Antenna System (DAS) etc.

The target cell 108b may be an inactive capacity cell. When the target cell 108b is an inactive capacity cell, it should be understood that the target cell 108b may be served by a lower power access node as described above. In such embodiments, the target RNN 108' is a lower power RNN.

**One or more additional target Radio Network Nodes (RNN) 108"** may operate in the wireless communications network 100. However, for clarity reasons only one additional target RNN 108" is illustrated in Figure 1. The one or more additional target RNNs 108" may be comprised in the wireless communications network 100. Each one of the one or more additional target RNNs 108" may be a radio access node such as a radio base station, for example an eNodeB, also denoted eNB, a Home eNodeB, or a NodeB or any other network node capable to serve a communications device 106 when located within **an additional target area 108c,** e.g. an additional geographical area, in a communications network, such as the communications network 100. Thus, one or more additional target cell areas 108c may exist. In this disclosure, the additional target area 108c is sometimes referred to as an additional target coverage area, an additional target cell or an additional target cluster wherein the additional target RNN 108" provides radio coverage. Herein, this is also specified as the additional target RNN 108" manages or is configured to manage communication with the communications devices 106 in the additional area 108c. Sometimes in this disclosure this is also referred to as the additional target RNN 108" is associated with communications device 106 when it is located and/or operates within the additional target area 108c.

The terms additional target area 108c, additional target coverage area 108c, additional target cell 108c and additional target cluster 108c may be used interchangeably. Sometimes herein the additional target area 108c is referred to as an additional capacity cell.

Other examples of the additional target RNN 108" are Multi-Standard Radio (MSR) nodes such as MSR BS, network controllers, Radio Network Controllers (RNCs), Base Station Controllers (BSCs), relays, donor nodes controlling relay, Base Transceiver Stations (BTSs), Access Points (APs), transmission points, transmission nodes, Radio Remote Units (RRUs), Remote Radio Heads (RRHs), nodes in Distributed Antenna System (DAS) etc.

The one or more additional target cells 108c may be one or more inactive additional capacity cells. When the one or more additional target cells 108c are inactive capacity cells, it should be understood that the one or more additional target cells 108c may be served by one or more lower power access nodes as described above. In such embodiments, the one or more additional target RNNs 108" are lower power RNNs.

**One or more second Radio Network Nodes (RNNs) 110, 112** may operate in the wireless communications network 100. The one or more second RNNs 110, 112 may sometimes be referred to as neighbouring RNNs, e.g. as a first neighbouring node 110 and a second neighbouring node 112. The one or more second RNNs 110, 112 may be comprised in the wireless communications network 100. Each one of the one or more second RNNs 110, 112 may be a radio access node such as a radio base station, for example an eNodeB, also denoted eNB, a Home eNodeB, or a NodeB or any other network node capable to serve a communications device 106 when located within a **respective second area 110a, 112a,** e.g. a second geographical area, in a communications network, such as the communications network 100. In this disclosure, the second area 110a, 112a is sometimes referred to as a second coverage area, a second cell or a second cluster wherein the respective second RNN 110, 112 provides radio coverage. Herein, this is also specified as the second RNN 110, 112 manages or is configured to manage communication with the communications devices 106 in the second area 110a, 112a.

Sometimes in this disclosure this is also referred to as the second RNN 110, 112 is associated with communications device 106 when it is located and/or operates within the second area 110a, 112a.

The terms second area 110a, 112a, second coverage area 110a, 112a, second cell 110a, 112a and second cluster 110a, 112a may be used interchangeably.

The second cell 110a, 112a may be basic coverage cells.

Other examples of the second RNN 110, 112 are Multi-Standard Radio (MSR) nodes such as MSR BS, network controllers, Radio Network Controllers (RNCs), Base Station Controllers (BSCs), relays, donor nodes controlling relay, Base Transceiver Stations (BTSs), Access Points (APs), transmission points, transmission nodes, Remote Radio Units (RRUs), Remote Radio Heads (RRHs), nodes in Distributed Antenna System (DAS) etc.

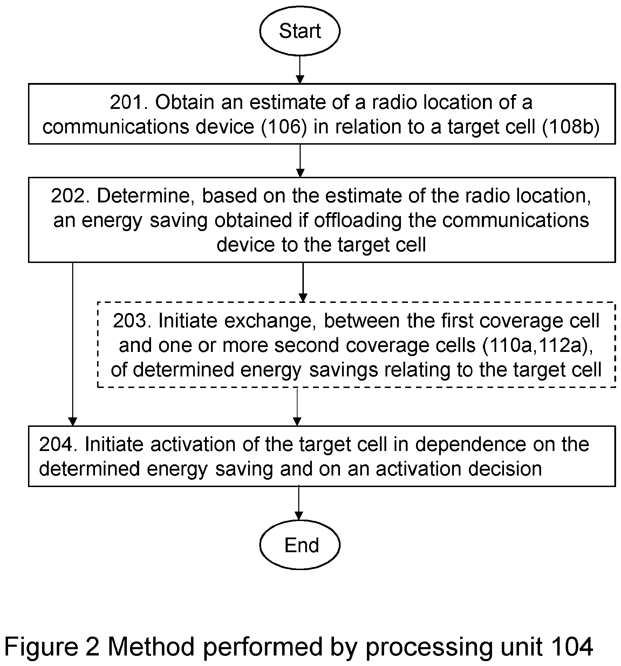

**Examples of methods performed by the processing unit 104** for initiating activation of a target cell will now be described with reference to the flowchart depicted in **Figure 2**. The communications device 106 is operating in the first cell 108a of the wireless communications network 100. As previously mentioned, the processing unit 104 is a network node, such as the first RNN 108 or the CNN, or the processing unit 104 is comprised in a network node, such as the first RNN 108 or the CNN. However, as also previously mentioned, the processing unit 104 may correspond to a node or may be comprised in a node operating in a computing cloud.

The methods comprise one or more of the following actions. It should be understood that the actions may be taken in any suitable order and that some actions may be combined. Actions that are optional are presented in dashed boxes in Figure 2.

**Action 201**

The processing unit 104 obtains an estimate of a radio condition of the communications device 106 in the target cell 108b comprised in the wireless communications network 100. Thereby, the processing unit 104 will get an estimate of the condition of the radio communication for the communications device 106 if it was operating in the target cell 108b. This will be used in Action 202 to determine energy saving obtained if offloading the communications device 106 from the first cell 108a to the target cell 108b.

The radio condition may for example be a signal quality of a signal transmitted by the target cell 108b, e.g. transmitted by a target RNN 108' serving the target cell 108b, and received by the communications device 106. Other examples of radio condition are the data packet bitrate when being served by the target cell or the power needed in the communications device when transmitting to the target node 108'.

The processing unit 104 may obtain the estimate of the radio condition by obtaining an estimate of a probability for the communications device 106 of being within radio coverage of the target cell 108b. For example, the communication device 106 may be determined to be within radio coverage when the signal quality is above a signal quality threshold.

It should be understood that the processing unit 104 may obtain the estimate of the radio condition based on the estimated probability by obtaining the estimate of the radio condition as being equal to the estimated probability.

However and alternatively, the processing unit 104 may obtain the estimate of the radio condition based on the estimated probability by obtaining the estimate of the radio condition as being equal to a function of the estimated probability. For example, the processing unit 104 may obtain the estimate of the radio location based on a linear function, e.g. a linear scaling function, that determines a mapping between the probability and the radio condition.

It should be understood that the processing unit 104 directly or indirectly obtain the estimates of the radio condition of the communications device 106 in the target cell 108b.

Thus, in some embodiment the processing unit 104 performs the estimation of the radio condition of the communications device 106 in the target cell 108b. This may be the case when the processing unit 104 is the first RNN 108 or when the processing unit 104 is comprised in the first RNN 108.

In other embodiments, the processing unit 104 receives or retrieves the estimations of the radio condition from another network node, e.g. from the first RNN 108. This may be the case when the processing unit 104 is the CNN or when the processing unit 104 is comprised in the CNN.

In some first embodiments, the probability may be estimated using a determined overlap between the first cell 108a and the target cell 108b as a probability metric for the communications device 106 of being within radio coverage of the target cell 108b.

For example, the processing unit 104 may determine or obtain a determination of an overlap between a first radio coverage of the first cell 108a and a second radio coverage of the target cell 108b. If the determined overlap is 20%, the probability metric may be determined to be 20% for the communications device 106 of being within radio coverage of the target cell 108b. As described above, the radio condition may be estimated to be equal to the estimated probability or to be equal to a function of the estimated probability. Therefore, in this example, the radio condition may be estimated to be equal to 20% or it may be equal to a function of 20%.

In some second embodiments, the probability is estimated using determined overlaps between a smaller cell area 108a', of the first cell 108a and a target cell 108b as probability metrics for the communications device 106 of being within radio coverage of the target cell 108b. Thereby, the probability is based on the smaller cell area with which the communications device 106 is associated with. That is, the smaller cell area 108a' of the first cell 108a in which smaller cell area 108a' the communications device 106 is located.

For example, the processing unit 104 may determine or obtain a determination of overlaps between the smaller cell area 108a' of the first cell 108a and the target cell 108b. The first cell 108a may be divided into the plurality of smaller cell areas 108a' by using e.g. a Timing Advance (TA) or Precoding Matrix Indicator (PMI).

The timing advance value corresponds to the length of time a signal takes to reach the first RNN 108 from the communications device 106. The PMI is an indicator transmitted from the communications device 106 to the first RNN 108 in order to indicate to the first RNN 108 which precoding matrix the first RNN 108 should use for downlink transmission to the communications device.

When using the TA the first cell 108a may be divided into the plurality of smaller cell areas 108a' by for example dividing the first cell into two areas, one area of which has a TA value above a threshold, while a second area has a TA below the mentioned threshold. Further, when using the PMI the first cell 108a may be divided into the plurality of smaller cell areas 108a' by dividing the first cell 108a into areas based on the PMI, whereby communication devices with similar PMI may belong to the same area, e.g. the same smaller cell area 108a'. The determined overlap for each one of the smaller cell areas 108a' may be used as a probability metric for the communications device 106 of being within radio coverage of the target cell 108b when being located within the respective smaller cell area 108a'. Thus, the probability will differ depending on in which part of the first cell 108a, e.g. in which smaller cell area 108a', the communications device 106 is located. It should be understood that the smaller cell area 108a' may be any type of area. For example, a cell area wherein the communications device 106 has for, its first cell 108a, a TA=1, and a PMI = 1, and not only the cell area of which a radio node is covering.

In some third embodiments, the probability is estimated based on a determined geographical location of the communications device 106. In such embodiments, the smaller cell area 108a' may be based on the determined geographical location.

For example, the processing unit 104 may determine or obtain a determination of a geographical location of the communications device 106. The determination of the geographical location may be performed by means of a positioning procedure such as based on a Global Navigation Satellite System (GNSS) such as an Assisted GNSS (A-GNSS), an Observed Time Difference of Arrival (OTDOA), an Uplink Time Difference of Arrival (UTDOA) or based on an Enhanced Cell ID (E-CID). If the geographical location is determined to be close to the target cell 108b, the probability for the communications device 106 of being within radio coverage of the target cell 108b may be estimated to be higher as compared to the case when the geographical location is determined to be far away from the target cell 108b.

The probability of target cell coverage for the communications device 106 may sometimes be referred to as a probability of the communications device u hearing a target cell c, e.g. the target cell 108b, and is denoted $p_{u,c}$. The term "hearable" in this context means being able to establish a connection to the target cell. It may however be defined in a different way, for example based on a signal strength threshold value or a signal quality threshold value.

## Action 202

In order to know whether any energy saving is achieved if initiating activation of the target cell 108b, the processing unit 104 determines, based on the estimate of the radio condition, an energy saving obtained if offloading the communications device 106 from the first cell 108a to the target cell 108b.

In some embodiments, the processing unit 104 determines the energy saving based on the estimated probability for the communications device 106 and on an energy measure for the communications device 106, wherein the energy measure comprises an energy consumption related to the communications device 106. For example, the energy consumption may be the communications device's 106 consumption of energy when in use. As another example, the energy consumption may relate to the consumption of energy when communicating with the communication device in the radio node controlling the first cell.

The processing unit 104 may determine the energy saving $E_c$ as

$$E_c = \sum_{u \in S} e_u p_{u,c}, \ (Equation\ 1)$$

wherein S is a set of communications devices u that are candidates for offloading to the target cell c. The set S of communications devices u comprises the communications device 106, and the target cell c is the target cell 108b. Further, the $e_u$ is an energy measure of the communications device 106, and the $p_{u,c}$ is a probability for the communications device 106 of being within radio coverage of the target cell 108b. The probability $p_{u,c}$ may also be said to refer to the probability for the communications device 106 to hear the target cell 108b. Thus, the target cell 108b may be said to be hearable for the communications device 106. The expression "hearable" when used herein is sometimes meant that the communications device 106 is able to establish a connection with the target cell 108b, e.g. to the target RNN 108' serving the target cell 108b. However, it should be understood that the term "hearable" may be defined in a different way relating to a signal strength threshold value or a quality threshold value just to give some other examples.

The energy measure $e_u$ of each communications device u, e.g. the communications device 106, may be based on the amount of traffic consumed by the communications device, and/or on the radio conditions for the communications device. One may expect a communications device in bad coverage with high data traffic to be more energy consuming than a communications device at good coverage with less data traffic. The energy measure may be an energy consumption measure, e.g. a measure of the energy consumed by the communications device or energy consumed by the first RNN 108 to serve the communications device.

In some embodiments, the energy measure is equal for all communications devices, that is, it is assumed that all communications devices consume the same amount of energy.

In some embodiments, the set S of communications devices u comprises communications devices having estimated probabilities larger than a probability threshold value. Thereby, the energy saving may be determined for the one or more communications devices, e.g. the communications device 106, having a probability of being in radio coverage with the target cell 108b that is larger than the probability threshold value. For example, the probability threshold value may be 0.5 in order to guarantee at least a 50% probability of having target cell radio coverage.

In some alternative embodiments, the set S of communications devices u comprises communications devices having energy measures larger than an energy measure threshold value. Thereby, the energy saving may be determined for the one or more communications devices, e.g. the communications device 106, having energy measures larger than the energy measure threshold value. For example, the energy measure threshold value may be higher than 0 in order to only comprise communication devices that consumes energy in the first cell.

In some further alternative embodiments, the set S of communications devices u comprises communications devices for which a combination of the energy measure and the estimated probability is higher than a threshold value. This threshold value may sometimes in this disclosure be referred to as a combined threshold value. Thus, the energy saving may be determined for the one or more communications devices, e.g. the communications device 106, having a combination of the energy measure and the estimated probability that is larger than the threshold value. For example, the threshold value may be an energy threshold of 0 and probability threshold of 0.5, in order to only comprise communication devices with 50 % probability of target cell coverage and non-zero energy consumption.

However, the set S of communications devices may be determined via some constraint on the communications network, e.g. the communications network 100. For example a constraint on how many communications devices that may be configured to be handed over to the target cell 108b.

The determined energy saving may be comprised in cell energy information, such as Capacity Cell Energy Information (CCEI), of a cell such as the first or second cell. In some embodiments, the cell energy information, e.g. the CCEI, may also comprise the savings of other processing relating to the communications device. Some examples of such processing are signalling and scheduling at the first cell, which depends on the number of served communications devices.

**Action 203**

The processing unit 104 may initiate exchange, between the first cell 108a and one or more second cells 110a, 112a, of determined energy savings relating to the target cell 108b. In other words, the processing unit 104 may initiate exchange of determined energy savings between several cells 108a, 110a, 112a, e.g. between several RNNs 108, 110, 112 operating in the wireless communications network 100. By exchanging the determined energy savings, a cell, e.g. the first cell 108a, that has determined based on its own energy saving that it is not efficient to activate the target cell 108b may, based on the determined energy savings from the other cells 110a, 112a, determine that it may be efficient to activate the target cell 108b. Thus, by exchanging energy savings between the cells, the cells may receive information that may be combined to assist each cell, e.g. the first cell 108a, in the determination of whether or not a target cell 108b is to be activated.

For example, the exchange of information may be performed in LTE by using the X2 protocol and by extending it with an Information Element (IE), e.g. a CCEI element, comprising the information. It should be understood that in another Radio Access Technology (RAT) another suitable protocol for communication between the cells, e.g. the RNNs serving the cells, may be used.

It should be noted that sometimes in this disclosure it is stated that a cell is performing one or more operations, such as receiving, transmitting, exchanging, determining, etc. By such expressions it should understood that the access node serving the cell is performing the stated operations, e.g. the receiving, transmitting, exchanging, determining etc.

**Action 204**

The processing unit 104 initiates activation of the target cell 108b in dependence on the determined energy saving and on an activation decision.

By the term "activation decision" when used in this disclosure is meant a decision of whether or not a parameter value is above or below a threshold value, a decision is whether or not multiple parameters is above or below multiple thresholds, just to mention some examples.

In some embodiments, the processing unit 104 initiates activation of the target cell 108b by initiating activation of the target cell 108b when the activation decision has determined that the energy saving is larger than an activation threshold value.

In some alternative embodiments, the processing unit 104 initiates activation of the capacity cell 108b by initiating activation of the target cell 108b when the activation decision has determined that the target cell 108b has the largest difference between the energy saving and its activation threshold value as compared to other target cells comprised in the wireless communications network 100.

In some further alternative embodiments, the processing unit 104 initiates activation of the target cell 108b when the activation decision has determined that aggregated information relating to determined energy savings received from the first cell 108a and from one or more second cells 110a, 112a is above an activation threshold value.

The processing unit 104 may initiate activation of the target cell 108b by directly transmitting an activation command to the target node 108'. This may be the case when the processing unit 104 is or is comprised in the first RNN 108.

Alternatively, the processing unit 104 may initiate activation of the target cell 108b by indirectly transmitting the activation command to the target node 108' via another node, the other node e.g. being the first RNN 108. This may be the case when the processing unit is located separately from the first RNN 108. For example, when the processing unit 104 is or is comprised in the CNN.

Some examples of activation scenarios

The one or more target cells, e.g. the target cell 108b, may be activated by using the cell energy information element, e.g. the CCEI element, from one target cell, e.g. the target cell 108b, and an activation threshold value. For example, the target cell may be activated when

$$E_c > \epsilon_c,$$

wherein $\epsilon_C$ is the energy cost of activating the target cell c, e.g. the target cell 108b. In other words, it is determined whether the energy saving $E_c$ is larger than the cost metric $\epsilon_C$. The energy threshold may be determined based on the power consumption of the target cell 108b, or based a combination of the power consumption and the required capacity enhancement needed. For example, the threshold should be lower when opting for higher capacity with less energy saving restrictions. In some embodiments, the energy cost $\epsilon_C$ also comprises the estimated energy cost to serve the communications devices, e.g. the communications device 106, moved into the target cell 108b, which will give a better estimate, especially when the target cell 108b is not served by a small low power node where the served communications devices typically are close to the cell antenna.

Furthermore, when handover is used to move the communications devices, e.g. the communications device 106, the handover procedure from the basic coverage cell, e.g. the first cell 108a, to one or more target cell(s), e.g. the target cell 108b, may comprise an extra signalling cost due to the needed Radio Resource Control (RRC) signalling. This will be an associated cost when activating the target cells, e.g. the target cell 108b. The additional signalling may be seen as the energy spent in vain if the communications device 106, who measured on the target cell 108b, didn't have any coverage. This energy information may be comprised in the activation decision and may optionally be based on the probabilities $p_{u,c}$. For example, the energy information relating to energy spent in vain may be determined as $(1-p_{u,c})$ times the energy related to the additional signalling.

In case of multiple candidate target cells, e.g. the target cell 108b and one or more additional target cells 108c, the target cell c with the largest difference in respect of its threshold value $\epsilon_c$ is activated. In other words, the target cell c that maximizes

$$\text{argmax}(E_c - \epsilon_c), \qquad \text{Equation 2}$$
$$c \in C \, ,$$

wherein C is the set of candidate target cells to which the target cell c belongs.

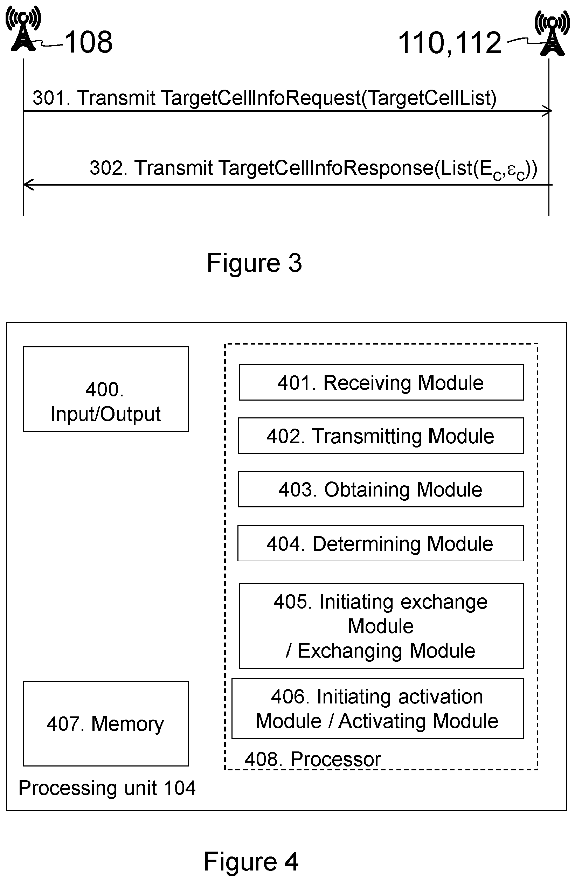

In some embodiments, the target cell(s) is/are activated by multiple cell energy information, e.g. the CCEI from a multiple of basic coverage cells, e.g. from the first cell 108a and from one or more second cells 110a, 112a. The target cell c is activated if the aggregated information of the multiple of basic coverage cells results in being above the threshold $\epsilon_C$. A node controlling a target cell, that has estimated a possible energy saving by waking up a target cell, but not high enough to by itself qualify to wake up the target cell, requests and receives energy saving estimates from other coverage cells. The received estimates may comprise $E_c$ and $\epsilon_C$ for the target cell(s). The exchange of information was described in Action 203 above and will be described below with reference to Figure 3.

An example of how the first RNN 108 and the one or more second RNNs 110, 112 may operate for exchanging determined energy savings relating to the target cell 108b, will now be described with reference to the combined flowchart and signalling scheme depicted in Figure 3. As previously mentioned, the first RNN 108 and the one or more second RNNs 110,112 are operating in the wireless communications network 100.

The procedure depicted in Figure 3 comprises one or more of the following actions. It should be understood that these actions may be taken in any suitable order and that some actions may be combined.

## Action 301

The first RNN 108 transmits, to the one or more second RNNs 110,112, a request for determined energy savings relating to one or more target cells, e.g. to the target cell 108b. The request may e.g. be referred to as TargetCellInfoRequest(TargetCellList). Information identifying the one or more target cells may be comprising in a target cell list transmitted from the first RNN 108 to the one or more second RNNs 110,112.

As mentioned above in relation to Action 203, the processing unit 204 may initiate the activation of the exchange of determined energy savings. Thus, the first RNN 108 may receive a request from the processing unit 104 to transmit the request to the one or more second RNNs 110,112.

## Action 302

In response to the transmitted request, the first RNN 108 may receive from the one or more second RNNs 110, 112 a respective response comprising determined energy savings $E_c$ for the one or more target cells, e.g. the target cell 108b. The response may also comprise the energy cost $\varepsilon_C$ for activating the respective target cell. The response may e.g. be referred to as TargetCellInfoResponse(List($E_c,e_c$)).

To perform the **method for initiating activation of a target cell** in the wireless communications network 100, **the processing unit 104** may be configured according to an arrangement depicted in **Figure 4**. As previously mentioned, the communications device 106 is operating in the first cell 108a of the wireless communications network 100 and the processing unit 104 is or is comprised in a network node such as the RNN, e.g. the first RNN 108, or the CNN 103.

The processing unit 104 comprises **an input and output interface 400** configured to communicate, with one or more network nodes, e.g. with one or more RNNs or with the CNN, operating in the wireless communications network 100. The input and output interface 400 may comprise a wireless receiver (not shown) and a wireless transmitter (not shown).

The processing unit 104 is configured to receive, e.g. by means of **a receiving module 401** configured to receive, a transmission from the communications device 106 or from one or more network nodes, e.g. from one or more RNNs or from the CNN, operating in the wireless communications network 100. The receiving module 401 may be implemented by or arranged in communication with **a processor 408** of the processing unit 104. The processor 408 will be described in more detail below.

The processing unit 104 is configured to transmit, e.g. by means of **a transmitting module 402** configured to transmit, a transmission to the communications device 106 or to one or more network nodes, e.g. to one or more RNNs or to the CNN, operating in the wireless communications network 100. The transmitting module 402 may be implemented by or arranged in communication with the processor 408 of the processing unit 104.

The processing unit 104 is configured to obtain, e.g. by means of **an obtaining module 403** configured to obtain, an estimate of a radio condition of the communications device 106 in relation to the target cell 108b comprised in the wireless communications network 100. The obtaining module 403 may be implemented by or arranged in communication with the processor 408 of the processing unit 104.

The processing unit 104 may be configured to obtain the estimate of the radio condition by being configured to obtain an estimate of a probability for the communications device 106 of being within radio coverage of the target cell 108b.

In some first embodiments, the probability is estimated using a determined overlap between the first cell 108a and the target cell 108b as a probability metric for the communications device 106 of being within radio coverage of the target cell 108b.

In some second embodiments, the probability is estimated using determined overlaps between a smaller cell area 108a' of the first cell 108a and the target cell 108b as probability metrics for the communications device 106 of being within radio coverage of the target cell 108b.

In some third embodiments, the probability is estimated based on a determined geographical location of the communications device 106.

The processing unit 104 may be configured to obtain the estimate of the radio condition based on the estimated probability by being configured to obtain the estimate of the radio condition as being equal to the estimated probability.

Alternatively, the processing unit 104 may be configured to obtain the estimate of the radio condition based on the estimated probability by being configured to obtain the estimate of the radio condition as being equal to a function of the estimated probability.

The processing unit 104 is configured to determine, e.g. by means of **a determining module 404** configured to determine, based on the estimate of the radio condition, an energy saving obtained if offloading the communications device 106 to the target cell 108b. The determining module 404 may be implemented by or arranged in communication with the processor 408 of the processing unit 104.

The processing unit 104 may be configured to determine the energy saving by being configured to determine the energy saving based on the estimated probability for the communications device 106 and on an energy measure for the communications device 106, wherein the energy measure comprises an energy consumption related to the communications device 106.

In some embodiments, the processing unit 104 is configured to determine the energy saving by being configured to determine the energy saving $E_c$ as

$$E_c = \sum_{u \in S} e_u p_{u,c}, \text{ (Equation 1)}$$

wherein S is a set of communications devices u that are candidates for offloading to the target cell c, the set S of communications devices u comprises the communications device 106, the target cell c is the target cell 108b, the $e_u$ is an energy measure of the communications device 106, and the $p_{u,c}$ is a probability for the communications device 106 of being within radio coverage of the target cell 108b.

In some embodiments, the set S of communications devices u comprises communications devices having estimated probabilities larger than a probability threshold value.

In some other embodiments, the set S of communications devices u comprises communications devices having energy measures larger than an energy measure threshold value.

Alternatively, the set S of communications devices u may comprise communications devices for which a combination of the energy measure and the estimated probability is higher than a threshold value.

The processing unit 104 may be configured to initiate exchange and/or to exchange, e.g. by means of **an initiating exchange and/or exchanging module 405** configured to initiate exchange of and/or to exchange, determined energy savings relating to the target cell 108b between the first cell 108a and one or more second cells 110a, 112a. The initiating exchange and/or exchanging module 405 may be implemented by or arranged in communication with the processor 408 of the processing unit 104.

The processing unit 104 is configured to initiate activation and/or to activate, e.g. by means of **an initiating activation and/or activating module 406** configured to initiate activation of and/or to activate, the target cell 108b in dependence on the determined energy saving and on an activation decision. The initiating activation and/or activating module 406 may be implemented by or arranged in communication with the processor 408 of the processing unit 104.

In some embodiments, the processing unit 104 is configured to initiate activation of the target cell 108b by being configured to initiate activation of the target cell 108b when the activation decision has determined that the energy saving is larger than an activation threshold value.

In some alternative embodiments, the processing unit 104 is configured to initiate activation of the target cell 108b by being configured to initiate activation of the target cell 108b when the activation decision has determined that the target cell 108b has the largest difference between the energy saving and its activation threshold value as compared to other target cells comprised in the wireless communications network 100.

In some further alternative embodiments, the processing unit 104 is configured to initiate activation of the target cell 108b by being configured to initiate activation of the capacity cell 108b when the activation decision has determined that aggregated information relating to determined energy savings received from the first cell 108a and from one or more second cells 110a, 112a is above an activation threshold value.

The processing unit 104 may also comprise means for storing data. In some embodiments, the processing unit 104 comprises a **memory 407** configured to store the data. The data may be processed or non-processed data and/or information relating thereto. The memory 407 may comprise one or more memory units. Further, the memory 407 may be a computer data storage or a semiconductor memory such as a computer memory, a read-only memory, a volatile memory or a non-volatile memory. The memory is arranged to be used to store obtained information, data, configurations, schedulings, and applications etc. to perform the methods herein when being executed in the processing unit 104.

Embodiments herein for initiating activation of a cell may be implemented through one or more processors, such as **the processor 408** in the arrangement depicted in Figure 4, together with computer program code for performing the functions and/or method actions of embodiments herein. The program code mentioned above may also be provided as a computer program product, for instance in the form of a data carrier carrying computer program code for performing the embodiments herein when being loaded into the processing unit 104. One such carrier may be in the form of an electronic signal, an optical signal, a radio signal or a computer readable storage medium. The computer readable storage medium may be a CD ROM disc or a memory stick.

The computer program code may furthermore be provided as program code stored on a server and downloaded to the processing unit 104.

Those skilled in the art will also appreciate that the input/output interface 400, the receiving module 401, the transmitting module 402, the obtaining module 403, the determining module 404, the initiating exchange and/or exchanging module 405, and initiating activation and/or activating module 406 above may refer to a combination of analog and digital circuits, and/or one or more processors configured with software and/or firmware, e.g. stored in the memory 407, that when executed by the one or more processors such as the processors in the processing unit 104 perform as described above. One or more of these processors, as well as the other digital hardware, may be included in a single Application-Specific Integrated Circuitry (ASIC), or several processors and various digital hardware may be distributed among several separate components, whether individually packaged or assembled into a System-on-a-Chip (SoC).

As previously mentioned, the processing unit 104 may be a network node such as the RNN, e.g. the first RNN 108, or a CNN. Alternatively, the processing unit 104 may be comprised in the RNN, e.g. the first RNN 108, or the CNN.

## Some exemplifying examples

### A first exemplifying example

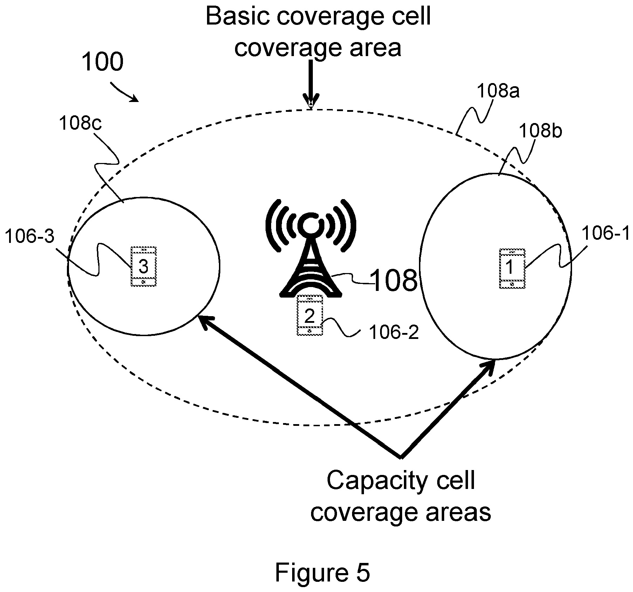

**Figure 5** is a schematic block diagram schematically illustrating a first exemplifying example of embodiments of a communications network such as the wireless communications network 100. In the first exemplifying example, the target cell, e.g. the target cell 108b, is activated from a serving cell, e.g. the first cell 108a, e.g. from the first RNN 108 serving the serving cell, without any information from an additional target cell, e.g. from the additional target cell 108c.

Three communications devices, e.g. a first communications device 106-1, a second communications device 106-2, and a third communications device 106-3, operate in the wireless communications network 100 and are associated with a certain probability of target cell coverage $p_{u,c}$. The probability of target cell coverage may be specific for each one of the communications devices 106-1, 106-2, 106-3. As mentioned above, the probabilities may be obtained by the processing unit 104.

Assume that the probabilities of target cell coverage have been derived using anyone of the methods described above.

Further, assume for the target cell 108b that the probabilities for the first, second and third communications devices 106-1, 106-2, 106-3 are $p_{1,1} = 0.9$, $p_{2,1} = 0.3$, and $p_{3,1} = 0.1$, and that for the additional target cell 108c the probabilities for the first, second and third communications devices are $p_{1,2} = 0.1$, $p_{2,2} = 0.3$, and $p_{3,2} = 0.9$.

Furthermore, assume that the energy per communications device 106-1, 106-2, 106-3 is proportional to the amount of traffic transferred during the last t1 seconds, and assume that the energy measure per communications device 106-1, 106-2, 106-3 is $e_1 = 10$, $e_2 = 1$, $e_3 = 1$. Then, using Equation 1 above, the energy saving $E_c$ is calculated as $E_1 = 0.9*10 + 1*0.3 + 1*0.1 = 9.4$, and $E_2 = 10*0,1 + 1*0.3 + 1*0.9 = 2.2$. The target cell 108b is thus activated when the activation threshold value $\varepsilon_1$ for the target cell 108b is less than 9,4, i.e. when $\varepsilon_1 < 9.4$. Correspondingly, the additional target cell 108c is activated when the activation threshold value $\varepsilon_2$ for the additional target cell 108c is less than 2,2, i.e. when $\varepsilon_2 < 2.2$.

Yet further, if both the target cell 108b and the additional target cell 108c fulfil their respective activation threshold value, the respective target cells 108b, 108c is activated according to Equation 2 above. That is, the target cell having the largest difference between its determined energy saving $E_c$ and its threshold value is activated. Thereby, the energy savings is maximized. After activation of one of the target cells, e.g. the target cell 108b, and after movement, e.g. handover, of suitable communications devices to the activated target cell 108b, the evaluation of the remaining switched-off target cells continues. The remaining switched-off target cells may be further additional target cells 108c.

### A second exemplifying example

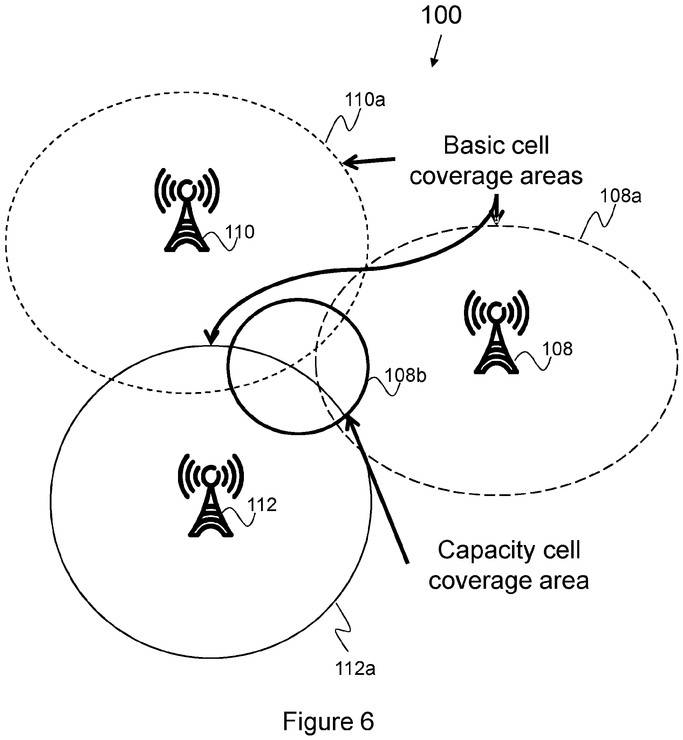

**Figure 6** is a schematic block diagram schematically illustrating a second exemplifying example of embodiments of a communications network, e.g. the wireless communications network 100. In the second exemplifying example, the target cell, e.g. the target cell 108b, is activated based on second cell information, e.g. based on information received from one or more second cells 110a, 112a. In **Figure 6**, the coverage area of four cells, e.g. the first cell 108a, two second cells 110a, 112a and the target cell 108b are depicted. Furthermore, assume that the target cell 108b is powered down and that it require at least five communications devices, e.g. $\varepsilon = 5$, to be activated and thus be more energy efficient as compared to the case when the five communications devices remain in the respective cell 108a, 110a, 112a. In this example, we assume that all communications devices have an energy consumption equal to one energy unit, i.e. $e_1 = e_2 = e_3 = e_4 = e_5 = 1$. Assume that each cell 108a, 110a, 112a estimates that it is able to handover two communications devices to the target cell 108b. For example, by having three communications devices with the probability of target cell coverage $p_{u,c} = 0.66$, or two communications devices with the probability of target cell coverage $p_{u,c} = 1$. If cell 108a, 110a, 112a would make a separate wake up decision, then the target cell 108b would not be activated since each respective cell 108a, 110a, 112a only estimates that two communications devices may be handed over, that is, they do not exceed the activation threshold of five communications devices. However, when combining the information, for example when the cell 110a, 112a signals that two communications devices may be handed over to the first cell 108a, the first cell 108a estimates that six communications devices are possible to handover to the target cell 108b which is enough to activate the target cell 108b, leading to enhancements in terms of energy consumption and possibly also in terms of capacity.

When using the word "comprise" or "comprising" it shall be interpreted as non-limiting, i.e. meaning "consist at least of".

The embodiments herein are not limited to the above described preferred embodiments. Therefore, the above embodiments should not be taken as limiting the scope of the invention, which is defined by the appending claims.

## Claims

1. A method performed by a processing unit (104) for initiating activation of a target cell, wherein a communications device (106) is operating in a first cell (108a) of a wireless communications network (100); and wherein the method is **characterized by**:

   - *obtaining (201)* an estimate of a probability for the communications device (106) of being within radio coverage of a target cell (108b) comprised in the wireless communications network (100);

- *determining (202),* based on the estimated probability and on an energy measure for the communications device (106), an energy saving obtained if offloading the communications device (106) from the first cell (108a) to the target cell (108b), wherein the energy measure comprises an energy consumption related to the communications device (106), and wherein the probability is estimated using a determined overlap between the first cell (108a) and the target cell (108b) as a probability metric for the communications device (106) of being within radio coverage of the target cell (108b); and

- *initiating activation (204)* of the target cell (108b) in dependence on the determined energy saving and on an activation decision.

2. The method of claim 1, wherein the probability is estimated using determined overlaps between a smaller cell area (108a') of the first cell (108a) and the target cell (108b) as probability metrics for the communications device (106) of being within radio coverage of the target cell (108b), wherein the smaller cell area (108a) of the first cell (108a) is smaller than the area of the first cell (108a).

3. The method of claim 1, wherein the probability is estimated based on a determined geographical location of the communications device (106).

4. The method of any one of claims 1-3, wherein the *initiating of activation (204)* of the target cell (108b) comprises:

- initiating activation of the target cell (108b) when the activation decision has determined that the energy saving is larger than an activation threshold value.

5. The method of any one of claims 1-3, wherein the *initiating of activation (204)* of the target cell (108b) comprises:

- initiating activation of the target cell (108b) when the activation decision has determined that the target cell (108b) has the largest difference between the energy saving and its activation threshold value as compared to other target cells comprised in the wireless communications network (100).

6. The method of any one of claims 1-3 wherein the *initiating of activation (204)* of the target cell (108b) comprises:

- initiating activation of the target cell (108b) when the activation decision has determined that aggregated information relating to determined energy savings received from the first cell (108a) and from one or more second cells (110a,112a) is above an activation threshold value.

7. The method of any one of claims 1-6, further comprising:

- *initiating exchange (203),* between the first cell (108a) and one or more second cells (110a,112a), of determined energy savings relating to the target cell (108b).

8. A processing unit (104) for initiating activation of a target cell, wherein a communications device (106) is operating in a first cell (108a) of a wireless communications network (100); and wherein the processing unit (104) is **characterized by** being configured to:

- obtain an estimate of a probability for the communications device (106) of being within radio coverage of a target cell (108b) comprised in the wireless communications network (100);

- determine, based on the estimated probability and on an energy measure for the communications device (106), an energy saving obtained if offloading the communications device (106) to the target cell (108b), wherein the energy measure comprises an energy consumption related to the communications device (106), wherein the probability is estimated using a determined overlap between the first cell (108a) and the target cell (108b) as a probability metric for the communications device (106) of being within radio coverage of the target cell (108b); and

- initiate activation of the target cell (108b) in dependence on the determined energy saving and on an activation decision.

9. The processing unit (104) of claim 8, further being configured to:

- estimate the probability using determined overlaps between a smaller cell area (108a') of the first cell (108a) and the target cell (108b) as probability metrics for the communications device (106) of being within radio coverage of the target cell (108b), wherein the smaller cell area (108a) of the first cell (108a) is smaller than the area of the first cell (108a).

10. The processing unit (104) of claim 8, further being configured to:

- estimate the probability based on a determined geographical location of the communications device (106).

11. The processing unit (104) of any one of claims 8-10, wherein the processing unit (104) is configured to initiate activation of the target cell (108b) by being configured to:

- initiate activation of the target cell (108b) when the activation decision has determined that the energy saving is larger than an activation threshold value.

12. The processing unit (104) of any one of claims 8-10, wherein the processing unit (104) is configured to initiate activation of the target cell (108b) by being configured to:

- initiate activation of the target cell (108b) when the activation decision has determined that the target cell (108b) has the largest difference between the energy saving and its activation threshold value as compared to other target cells comprised in the wireless communications network (100).

13. The processing unit (104) of any one of claims 8-10, wherein the processing unit (104) is configured to initiate activation of the target cell (108b) by being configured to:

- initiate activation of the target cell (108b) when the activation decision has determined that aggregated information relating to determined energy savings received from the first cell (108a) and from one or more second cells (110a, 112a) is above an activation threshold value.

14. The processing unit (104) of any one of claims 8-13, wherein the processing unit (104) is configured to initiate activation of the target cell (108b) by being configured to:

- initiate exchange, between the first cell (108a) and one or more second cells (110a,112a), of determined energy savings relating to the target cell (108b).

15. The processing unit (104) of any one of claims 8-14, wherein the processing unit (104) is or is comprised in a network node such as a Radio Network Node, RNN, or a Core Network Node, CNN.

**Patentansprüche**

1. Verfahren, das von einer Verarbeitungseinheit (104) zum Initiieren der Aktivierung einer Zielzelle durchgeführt wird, wobei eine Kommunikationsvorrichtung (106) in einer ersten Zelle (108a) eines drahtlosen Kommunikationsnetzes (100) arbeitet; und wobei das Verfahren **durch Folgendes gekennzeichnet** ist:

- *Erhalten (201)* einer Schätzung einer Wahrscheinlichkeit für die Kommunikationsvorrichtung (106), sich innerhalb der Funkabdeckung einer Zielzelle (108b) zu befinden, die in dem drahtlosen Kommunikationsnetz (100) umfasst ist;
- *Bestimmen (202)*, basierend auf der geschätzten Wahrscheinlichkeit und auf einem Energiemaß für die Kommunikationsvorrichtung (106), einer Energieeinsparung, die erhalten wird, wenn die Kommunikationsvorrichtung (106) von der ersten Zelle (108a) zu der Zielzelle (108b) umgeladen wird, wobei das Energiemaß einen Energieverbrauch umfasst, der sich auf die Kommunikationsvorrichtung (106) bezieht, und wobei die Wahrscheinlichkeit unter Verwendung einer bestimmten Überlappung zwischen der ersten Zelle (108a) und der Zielzelle (108b) als eine Wahrscheinlichkeitsmetrik für die Kommunikationsvorrichtung (106), sich innerhalb der Funkabdeckung der Zielzelle (108b) zu befinden, geschätzt wird; und
- *Initiieren der Aktivierung (204)* der Zielzelle (108b) in Abhängigkeit von der bestimmten Energieeinsparung und von einer Aktivierungsentscheidung.

2. Verfahren nach Anspruch 1, wobei die Wahrscheinlichkeit unter Verwendung bestimmter Überlappungen zwischen einem kleineren Zellenbereich (108a') der ersten Zelle (108a) und der Zielzelle (108b) als Wahrscheinlichkeitsmetriken für die Kommunikationsvorrichtung (106), sich innerhalb der Funkabdeckung der Zielzelle (108b) zu befinden, geschätzt wird, wobei der kleinere Zellenbereich (108a) der ersten Zelle (108a) kleiner als der Bereich der ersten Zelle (108a) ist.

3. Verfahren nach Anspruch 1, wobei die Wahrscheinlichkeit auf der Grundlage eines bestimmten geografischen Standorts der Kommunikationsvorrichtung (106) geschätzt wird.

4. Verfahren nach einem der Ansprüche 1 bis 3, wobei das *Initiieren der Aktivierung (204)* der Zielzelle (108b) Folgendes umfasst:

- Initiieren der Aktivierung der Zielzelle (108b), wenn die Aktivierungsentscheidung bestimmt hat, dass die Energieeinsparung größer als ein Aktivierungsschwellenwert ist.

**5.** Verfahren nach einem der Ansprüche 1 bis 3, wobei das *Initiieren der Aktivierung (204)* der Zielzelle (108b) Folgendes umfasst:

- Initiieren der Aktivierung der Zielzelle (108b), wenn die Aktivierungsentscheidung bestimmt hat, dass die Zielzelle (108b) den größten Unterschied zwischen der Energieeinsparung und ihrem Aktivierungsschwellenwert im Vergleich zu anderen, in dem drahtlosen Kommunikationsnetz (100) umfassten Zielzellen aufweist.

**6.** Verfahren nach einem der Ansprüche 1 bis 3, wobei das *Initiieren der Aktivierung (204)* der Zielzelle (108b) Folgendes umfasst:

- Initiieren der Aktivierung der Zielzelle (108b), wenn die Aktivierungsentscheidung bestimmt hat, dass die von der ersten Zelle (108a) und von einer oder mehreren zweiten Zellen (110a, 112a) empfangenen gesammelten Informationen in Bezug auf bestimmte Energieeinsparungen über einem Aktivierungsschwellenwert liegen.

**7.** Verfahren nach einem der Ansprüche 1 bis 6, das ferner Folgendes umfasst:

- *Initiieren eines Austauschs (203)* zwischen der ersten Zelle (108a) und einer oder mehreren zweiten Zellen (110a, 112a) von bestimmten Energieeinsparungen in Bezug auf die Zielzelle (108b) .

**8.** Verarbeitungseinheit (104) zum Initiieren der Aktivierung einer Zielzelle, wobei eine Kommunikationsvorrichtung (106) in einer ersten Zelle (108a) eines drahtlosen Kommunikationsnetzes (100) arbeitet; und wobei die Verarbeitungseinheit (104) **dadurch gekennzeichnet ist, dass** sie für Folgendes konfiguriert ist:

- Erhalten einer Schätzung einer Wahrscheinlichkeit für die Kommunikationsvorrichtung (106), sich innerhalb der Funkabdeckung einer Zielzelle (108b) zu befinden, die in dem drahtlosen Kommunikationsnetz (100) umfasst ist;
- Bestimmen, basierend auf der geschätzten Wahrscheinlichkeit und auf einem Energiemaß für die Kommunikationsvorrichtung (106), einer Energieeinsparung, die erhalten wird, wenn die Kommunikationsvorrichtung (106) zu der Zielzelle (108b) umgeladen wird, wobei das Energiemaß einen Energieverbrauch umfasst, der sich auf die Kommunikationsvorrichtung (106) bezieht, wobei die Wahrscheinlichkeit unter Verwendung einer bestimmten Überlappung zwischen der ersten Zelle (108a) und der Zielzelle (108b) als eine Wahrscheinlichkeitsmetrik für die Kommunikationsvorrichtung (106), sich innerhalb der Funkabdeckung der Zielzelle (108b) zu befinden, geschätzt wird; und
- Initiieren der Aktivierung der Zielzelle (108b) in Abhängigkeit von der bestimmten Energieeinsparung und von einer Aktivierungsentscheidung.

**9.** Verarbeitungseinheit (104) nach Anspruch 8, die ferner für Folgendes konfiguriert ist:

- Schätzen der Wahrscheinlichkeit unter Verwendung bestimmter Überlappungen zwischen einem kleineren Zellenbereich (108a') der ersten Zelle (108a) und der Zielzelle (108b) als Wahrscheinlichkeitsmetriken für die Kommunikationsvorrichtung (106), sich innerhalb der Funkabdeckung der Zielzelle (108b) zu befinden, wobei der kleinere Zellenbereich (108a) der ersten Zelle (108a) kleiner als der Bereich der ersten Zelle (108a) ist.

**10.** Verarbeitungseinheit (104) nach Anspruch 8, die ferner für Folgendes konfiguriert ist:

- Schätzen der Wahrscheinlichkeit auf der Grundlage eines bestimmten geografischen Standorts der Kommunikationsvorrichtung (106).

**11.** Verarbeitungseinheit (104) nach einem der Ansprüche 8 bis 10, wobei die Verarbeitungseinheit (104) konfiguriert ist, um die Aktivierung der Zielzelle (108b) zu initiieren, indem sie für Folgendes konfiguriert ist:

- Initiieren der Aktivierung der Zielzelle (108b), wenn die Aktivierungsentscheidung bestimmt hat, dass die Energieeinsparung größer als ein Aktivierungsschwellenwert ist.

**12.** Verarbeitungseinheit (104) nach einem der Ansprüche 8 bis 10, wobei die Verarbeitungseinheit (104) konfiguriert ist, um die Aktivierung der Zielzelle (108b) zu initiieren, indem sie für Folgendes konfiguriert ist:

- Initiieren der Aktivierung der Zielzelle (108b), wenn die Aktivierungsentscheidung bestimmt hat, dass die Zielzelle (108b) den größten Unterschied zwischen der Energieeinsparung und ihrem Aktivierungsschwellenwert im Vergleich zu anderen, in dem drahtlosen Kommunikationsnetz (100) umfassten Zielzellen aufweist.

**13.** Verarbeitungseinheit (104) nach einem der Ansprüche 8 bis 10, wobei die Verarbeitungseinheit (104) konfiguriert ist, um die Aktivierung der Zielzelle (108b) zu initiieren, indem sie für Folgendes konfiguriert ist:

- Initiieren der Aktivierung der Zielzelle (108b), wenn die Aktivierungsentscheidung bestimmt hat, dass die von der ersten Zelle (108a) und von einer oder mehreren zweiten Zellen (110a, 112a) empfangenen gesammelten Informationen in Bezug auf bestimmte Energieeinsparungen über einem Aktivierungsschwellenwert liegen.

14. Verarbeitungseinheit (104) nach einem der Ansprüche 8 bis 13, wobei die Verarbeitungseinheit (104) konfiguriert ist, um die Aktivierung der Zielzelle (108b) zu initiieren, indem sie für Folgendes konfiguriert ist:

- Initiieren eines Austauschs zwischen der ersten Zelle (108a) und einer oder mehreren zweiten Zellen (110a, 112a) von bestimmten Energieeinsparungen in Bezug auf die Zielzelle (108b) .

15. Verarbeitungseinheit (104) nach einem der Ansprüche 8 bis 14, wobei die Verarbeitungseinheit (104) ein Netzwerkknoten, wie z. B. ein Funknetzwerkknoten, RNN (Radio Network Node), oder ein Kernnetzwerkknoten, CNN (Core Network Node), ist oder darin enthalten ist.

**Revendications**

1. Procédé réalisé par une unité de traitement (104) pour initier l'activation d'une cellule cible, dans lequel un dispositif de communications (106) fonctionne dans une première cellule (108a) d'un réseau de communications sans fil (100) ; et dans lequel le procédé est **caractérisé par** :

- *l'obtention (201)* d'une estimation d'une probabilité pour le dispositif de communications (106) d'être au sein d'une couverture radio d'une cellule cible (108b) comprise dans le réseau de communications sans fil (100) ;
- *la détermination (202)*, sur la base de la probabilité estimée et d'une mesure d'énergie pour le dispositif de communications (106), d'une économie d'énergie obtenue en cas de débarquement du dispositif de communication (106) de la première cellule (108a) à la cellule cible (108b), dans lequel la mesure d'énergie comprend une consommation d'énergie liée au dispositif de communication (106), et dans lequel la probabilité est estimée à l'aide d'un chevauchement déterminé entre la première cellule (108a) et la cellule cible (108b) comme une métrique de probabilité pour le dispositif de communications (106) d'être au sein d'une couverture radio de la cellule cible (108b) ; et
- *l'initiation d'activation (204)* de la cellule cible (108b) en fonction de l'économie d'énergie déterminée et d'une décision d'activation.

2. Procédé selon la revendication 1, dans lequel la probabilité est estimée à l'aide de chevauchements déterminés entre une zone de cellule plus petite (108a') de la première cellule (108a) et la cellule cible (108b) comme une métrique de probabilité pour le dispositif de communications (106) d'être au sein d'une couverture radio de la cellule cible (108b), dans lequel la zone de cellule plus petite (108a) de la première cellule (108a) est plus petite que la zone de la première cellule (108a).

3. Procédé selon la revendication 1, dans lequel la probabilité est estimée sur la base d'un emplacement géographique déterminé du dispositif de communication (106).

4. Procédé selon l'une quelconque des revendications 1 à 3, dans lequel *l'initiation d'activation (204)* de la cellule cible (108b) comprend :

- l'initiation d'activation de la cellule cible (108b) lorsque la décision d'activation a déterminé que l'économie d'énergie est plus grande qu'une valeur seuil d'activation.

5. Procédé selon l'une quelconque des revendications 1 à 3, dans lequel *l'initiation d'activation (204)* de la cellule cible (108b) comprend :

- l'initiation d'activation de la cellule cible (108b) lorsque la décision d'activation a déterminé que la cellule cible (108b) a la plus grande différence entre l'économie d'énergie et sa valeur seuil d'activation en comparaison avec d'autres cellules comprises dans le réseau de communications sans fil (100).

6. Procédé selon l'une quelconque des revendications 1 à 3, dans lequel *l'initiation d'activation (204)* de la cellule cible (108b) comprend :

- l'initiation d'activation de la cellule cible (108b) lorsque la décision d'activation a déterminé que des informations agrégées concernant des économies d'énergie déterminées reçues depuis la première cellule (108a) et depuis au moins une deuxième cellule (110a, 112a) est au-dessus d'une valeur seuil d'activation.

7. Procédé selon l'une quelconque des revendications 1 à 6, comprenant en outre :

- *l'initiation d'échange (203),* entre la première cellule (108a) et au moins une deuxième cellule (110a, 112a), d'économies d'énergie déterminées concernant la cellule cible (108b).

8. Unité de traitement (104) destinée à initier l'activation d'une cellule cible (108b), dans laquelle un dispositif de communications (106) fonctionne dans une première cellule (108a) d'un réseau de communications sans fil (100) ; et dans laquelle l'unité de traitement (104) est **caractérisée en ce qu'**elle est configurée pour :

- obtenir une estimation d'une probabilité pour le dispositif de communications (106) d'être au sein d'une couverture radio d'une cellule cible (108b) comprise dans le réseau de communications sans fil (100) ;
- déterminer, sur la base de la probabilité estimée et d'une mesure d'énergie pour le dispositif de communications (106), une économie d'énergie obtenue en cas de débarquement du dispositif de communication (106) à la cellule cible (108b), dans laquelle la mesure d'énergie comprend une consommation d'énergie liée au dispositif de communication (106), et dans laquelle la probabilité est estimée à l'aide d'un chevauchement déterminé entre la première cellule (108a) et la cellule cible (108b) comme une métrique de probabilité pour le dispositif de communications (106) d'être au sein d'une couverture radio de la cellule cible (108b) ; et
- initier l'activation de la cellule cible (108b) en fonction de l'économie d'énergie déterminée et d'une décision d'activation.

9. Unité de traitement (104) selon la revendication 8, qui est en outre configurée pour :

- estimer la probabilité à l'aide de chevauchements déterminés entre une zone de cellule plus petite (108a') de la première cellule (108a) et la cellule cible (108b) comme une métrique de probabilité pour le dispositif de communications (106) d'être au sein d'une couverture radio de la cellule cible (108b), dans laquelle la zone de cellule plus petite (108a) de la première cellule (108a) est plus petite que la zone de la première cellule (108a).

10. Unité de traitement (104) selon la revendication 8, qui est en outre configurée pour :

- estimer la probabilité sur la base d'un emplacement géographique déterminé du dispositif de communication (106).

11. Unité de traitement (104) selon l'une quelconque des revendications 8 à 10, dans laquelle l'unité de traitement (104) est configurée pour initier l'activation de la cellule cible (108b) en étant configurée pour :

- initier l'activation de la cellule cible (108b) lorsque la décision d'activation a déterminé que l'économie d'énergie est plus grande qu'une valeur seuil d'activation.

12. Unité de traitement (104) selon l'une quelconque des revendications 8 à 10, dans laquelle l'unité de traitement (104) est configurée pour initier l'activation de la cellule cible (108b) en étant configurée pour :

- initier l'activation de la cellule cible (108b) lorsque la décision d'activation a déterminé que la cellule cible (108b) a la plus grande différence entre l'économie d'énergie et sa valeur seuil d'activation en comparaison avec d'autres cellules comprises dans le réseau de communications sans fil (100).

13. Unité de traitement (104) selon l'une quelconque des revendications 8 à 10, dans laquelle l'unité de traitement (104) est configurée pour initier l'activation de la cellule cible (108b) en étant configurée pour :

- initier l'activation de la cellule cible (108b) lorsque la décision d'activation a déterminé que des informations agrégées concernant des économies d'énergie déterminées reçues depuis la première cellule (108a) et depuis au moins une deuxième cellule (110a, 112a) est au-dessus d'une valeur seuil d'activation.

14. Unité de traitement (104) selon l'une quelconque des revendications 8 à 13, dans laquelle l'unité de traitement (104) est configurée pour initier l'activation de la cellule cible (108b) en étant configurée pour :

- initier l'échange, entre la première cellule (108a) et au moins une deuxième cellule (110a, 112a), d'économies d'énergie déterminées concernant la cellule cible (108b).

15. Unité de traitement (104) selon l'une quelconque des revendications 8 à 14, dans laquelle l'unité de traitement est ou est comprise dans un nœud de réseau tel qu'un nœud de réseau radio, RNN, ou un nœud de réseau central, CNN.

Figure 1A

Figure 1B

Start

201. Obtain an estimate of a radio location of a
communications device (106) in relation to a target cell (108b)

202. Determine, based on the estimate of the radio location,
an energy saving obtained if offloading the communications
device to the target cell

203. Initiate exchange, between the first coverage cell
and one or more second coverage cells (110a,112a),
of determined energy savings relating to the target cell

204. Initiate activation of the target cell in dependence on the
determined energy saving and on an activation decision

End

Figure 2 Method performed by processing unit 104

108

110,112

301. Transmit TargetCellInfoRequest(TargetCellList)

302. Transmit TargetCellInfoResponse(List($E_c, \varepsilon_c$))

# Figure 3

| 400.<br>Input/Output | 401. Receiving Module |
| --- | --- |
| | 402. Transmitting Module |
| | 403. Obtaining Module |
| | 404. Determining Module |
| | 405. Initiating exchange<br>Module<br>/ Exchanging Module |
| 407. Memory | 406. Initiating activation<br>Module / Activating Module |
| | 408. Processor |

Processing unit 104

# Figure 4

Basic coverage cell
coverage area

100

108c

108a

108b

106-3

106-1

108

2

106-2

Capacity cell
coverage areas

Figure 5

100

110a

Basic cell
coverage areas

108a

110

108

108b

112

Capacity cell
coverage area

112a

Figure 6

**EP 3 501 209 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012329471 A1
- US 2016156440 A1
- US 2012142328 A1
- US 2015282070 A1